# EUROPÄISCHE PATENTSCHRIFT

(11) **EP 0 650 664 B1**
(45) Veröffentlichungstag und Bekanntmachung des Hinweises auf die Patenterteilung: **08.04.1998**
(21) Anmeldenummer: 94114009.7
(22) Anmeldetag: 07.09.1994
(51) Int. Cl.: A01D 85/00

(54) **Fahrbarer Ballenstapler für Vierkantballen**
Square bale collector
Groupeur de balles rectangulaires

(30) Priorität: 30.10.1993 DE 4337241
(43) Veröffentlichungstag der Anmeldung: 03.05.1995
(73) Patentinhaber: CLAAS Kommanditgesellschaft auf Aktien, 33428 Harsewinkel (DE)
(72) Erfinder: Tertilt, Werner, D-33428 Marienfeld (DE); Esken, Dirk, D-33428 Harsewinkel 3 (DE); Scholz, Egbert, D-33378 Rheda-Wiedenbrück (DE); Neukötter, Alois, D-48361 Beelen (DE); Kemner, Ludwig, D-48336 Sassenberg-Füchtdorf (DE)

(56) Entgegenhaltungen:
- EP-A- 0 247 700
- EP-A- 0 389 321
- EP-A- 0 622 011

## Beschreibung

Die Erfindung bezieht sich auf einen Ballenstapler für Vierkantballen aus Stroh, Heu oder Silage, welcher als Nachlaufgerät mit einer Ballenpresse lösbar gekoppelt ist, nach den Merkmalen des Oberbegriffes des Patentanspruches 1.

Ein derartiger Ballenstapler ist aus der EP 0 389 321 A 1 bekannt geworden und zeigt dabei in dem Fahrwerksrahmen ein oberes schräg nach unten verlaufendes Gleitschienenpaar und ein unteres horizontal verlaufendes Gleitschienenpaar, sowie eine zwischen dem unteren Gleitschienenpaar höhenverschwenkbare Rutsche.

Die beiden Gleitschienenpaare sind nach unten und außen wegschwenkbar über Steuermittel.

Der ankommende Ballen läuft hierbei zuerst auf das obere, geneigte Gleitschienenpaar und betätigt dann den Auslöser, so daß dieses Gleitschienenpaar nach außen wegschwenkt und der Ballen dann nach unten auf das zweite Gleitschienenpaar fällt, was jedoch aufgrund der geneigten Anordnung des oberen Gleitschienenpaares eine unkontrollierte Fallbewegung für den Ballen ergibt. Der nun auf dem unteren Gleitschienenpaar liegende Ballen hält dabei in nachteiliger Weise das obere Gleitschienenpaar in der geöffneten Stellung und der nachfolgende Ballen wird dann auf dem unten liegenden Ballen bis zum Auslöser verschoben, was eine hohe Reibungskraft zwischen beiden Ballen ergibt. Danach werden beide Ballen durch Öffnen des unteren Gleitschienenpaares über die sich absenkende Rutsche auf den Erdboden abgelegt, wobei jedoch noch kein weiterer Ballen nachfolgen kann, da das obere Gleitschienenpaar solange geöffnet bleibt, bis der Ballenstapel den Stapler verlassen hat. Hierdurch ist also keine kontinuierliche sondern lediglich eine taktweise Arbeitsweise möglich. Auch wird in diesem Stapler kein bündiger Ballenstapel aus zwei übereinanderliegenden Ballen geschaffen, was durch die Schräglage des oberen Gleitschienenpaares und der unkontrollierten Fallbewegungen nicht möglich sein dürfte.

Trotz der beiden Gleitschienenpaare übereinander und der Rutsche ist die Arbeitsweise dieses Staplers unzureichend.

Aufgabe der Erfindung ist es, den nach dem Oberbegriff des Patentanspruches 1 aufgebauten Ballenstapler in der Ballen-Verschiebe- und - Fallbewegung zu verbessern und dabei einen einwandfrei bündigen Ballenstapel aus zwei übereinanderliegenden Ballen zu erreichen, welches durch eine besondere Gestaltung der oberen Gleitschienen und eine auf die Ballenlänge einrichtbaren Steuerung für die Gleitschienen- und Rutschenentriegelung bei störungsfreier und rationeller Arbeitsweise ermöglicht wird.

Diese Aufgabe wird erfindungsgemäß durch die kennzeichnenden Merkmale des Patentanspruches 1 gelöst.

Die sich daran anschließenden Unteransprüche beinhalten Gestaltungsmerkmale, welche vorteilhafte und förderliche Weiterbildungen der Aufgabenlösung darstellen.

Der erfindungsgemäße Ballenstapler arbeitet mit einem oberen in Längsrichtung geteilten Gleitschienenpaar und einer unteren höhenverschwenkbaren Rutsche, wobei beide Bauteile in horizontaler Ebene liegen. Der Ballen wird auf den oberen Gleitschienen sicher bis zu dem Auslöser geführt und dann wird dieser Auslöser über Steuermittel zum Öffnen der Gleitschienen, in dem diese nach unten und außen wegschwenken, betätigt, und dann kann der Ballen auf einer Wurfparabel, die bedingt durch die Weiterfahrt der Ballenpresse mit Stapler entsteht, auf die untere Rutsche fallen, wobei hierfür senkrechte Führungen vorhanden sind.

Bei diesem Herabfallen des Ballens greifen Rückhalter in die Seitenflanken des Ballens ein und arretieren diesen sicher auf der Rutsche. Sofort nach dem Herunterfallen des Ballens kann das obere Gleitschienenpaar wieder geschlossen werden, d.h. nach oben zurückschwenken und den nachfolgenden Ballen aufnehmen, der dann wiederum den Auslöser betätigt und die Gleitschienen geöffnet werden, so daß dann der Ballen auf den unteren Ballen fällt. Aufgrund der Wurfparabel liegt dieser obere Ballen jetzt jedoch um einen Versatz gegenüber dem unteren Ballen zurück und demzufolge wird dieser Ballen von dem nachfolgenden Ballen weiter mit dem Auslöser verschoben, bis er bündig mit dem unteren Ballen liegt, und erst dann wird über den Auslöser und die Steuermittel die Rutsche nach unten geschwenkt, so daß beide bündig übereinanderliegenden Ballen auf den Erdboden abgelegt werden können. Dieser Ballenversatz läßt sich durch die Steuermittel, welche wegversetzt nacheinander die Gleitschienen und die Rutsche schalten, einstellen.

Durch die geteilten Schienen braucht nicht mit dem Schließen der dem Preßkanal benachbarten Schienenteile gewartet zu werden, bis die hinteren Schienenteile ebenfalls schließen, sondern diese vorderen Schienenteile können frei gegenüber den hinteren Schienenteilen hochschwenken und somit sofort den nachfolgenden Ballen geführt aufnehmen.

Für die Steuerung der Gleitschienen und der Rutsche wirkt der Auslöser über Hebel und Wellen sowie Zugstangen mit den den Gleitschienen und der Rutsche zugeordneten Entriegelungsmechanismen zusammen, und diese Steuerung und die Entriegelungsmechanismen sind einfach aufgebaut, dauerhaft haltbar ausgeführt und arbeiten störungsfrei.

Zwischen dem Preßkanal und den vorderen Schienenteilen ist eine Zwischenrutsche angeordnet, die auf unterschiedliche Ballenlängen einstellbar ist, so daß die aus dem Preßkanal austretenden Ballen auf dieser Rutsche mit Tragrollen reibungsgemindert bis zu den Gleitschienen geführt werden und in diesem Bereich ihre Expansion durchführen können, so daß der vierkantige Querschnitt der Ballen bereits schon auf den vorderen Schienenteilen erreicht ist, und somit ein Absacken des Ballens zwischen die vorderen Schienen ausgeschlossen wird. Für die unabhängige und gemeinsame Schließbewegung der vorderen und hinteren Schienenteile ist im Verriegelungsmechanismus der Gleitschienen ebenfalls eine einstellbare Mitnahmesteuerung vorgesehen.

Weiterhin ist der Auslöser, welcher vom Ballen betätigt und auf einem gewissen Hub für die Steuerung der Gleitschienen und auf einem zusätzlichen Hub für die Steuerung der Rutsche verfahrbar ist, mit einer Überlastsicherung ausgerüstet, die Störungen bei zu hohem Ballendruck vermeidet.

Auf den Zeichnungen ist ein Ausführungsbeispiel der Erfindung dargestellt, welches nachfolgend näher erläutert wird. Es zeigt:
- Fig. 1: eine perspektivische Ansicht eines fahrbaren, an eine Ballenpresse anhängbaren Ballenstaplers mit oberen Gleitschienen, unterer Rutsche und Auslöser,
- Fig. 2: eine Seitenansicht des Ballenstaplers,
- Fig. 3: eine Seitenansicht im Schnitt gemäß Schnittlinie I-I in Fig. 6 durch den verfahrbaren Auslöser mit einem Triebhebel, zwei Schalt- und zwei Hubhebeln,
- Fig. 4: eine perspektivische Darstellung der Hebel gemäß Fig. 3,
- Fig. 5: eine Seitenansicht im Schnitt gemäß Schnittlinie II-II in Fig. 1 des hinteren Ballenstapler-Endbereiches mit Auslöser mit Schlitten, Lenkeraufhängung, Triebhebel und Überlastsicherung sowie Gleitschienen- und Rutschen-Entriegelung,
- Fig. 6: eine Rückansicht im Schnitt des Ballenstaplers mit Auslöser, Gleitschienen, Rutsche und Entriegelungsmechanismen entsprechend Schnittlinie III-III in Fig. 5,
- Fig. 7: eine perspektivische Darstellung eines Teiles einer geteilten Gleitschiene im Stoßbereich ihrer vorderen und hinteren Schienenteile,
- Fig. 8: eine perspektivische Darstellung des Entriegelungsmechanismusses des hinteren Schienenteiles der Gleitschiene,
- Fig. 9: eine Rückansicht des Ballenstaplers im Schnitt gemäß Schnittlinie IV-IV in Fig. 2 mit Rutsche und seitlichen, schwenkbaren Rückhaltern,
- Fig. 10 bis 12: schematische Seitenansicht des Ballenstaplers in den Ballenstapel-Abläufen,
- Fig. 13: eine perspektivische Darstellung zweier hinterer Ballen-Sicherungsklappen,
- Fig. 14: eine schematische Draufsicht auf die Ballen-Sicherungsklappen.

Der fahrbare Ballenstapler für Vierkantballen (B) ist als Nachlaufgerät mit einer Ballenpresse (1) lösbar gekoppelt -an die Ballenpresse (1) abnehmbar angehängt- und hat einen von Rädern (2) getragenen Fahrwerksrahmen (3). Am Fahrwerksrahmen (3) sind zwei obere, den aus dem Presskanal (4) der Ballenpresse (1) austretenden Ballen (B) beidseitig in Press- und Schieberichtung (R) tragende Gleitschienen (5), die in Abhängigkeit vom Ballen (B) über einen Auslöser (6) nach unten seitlich wegschwenken und den Ballen (B) nach unten freigeben, angeordnet.

Mit Abstand unterhalb der Gleitschiene (5) ist eine in Press- und Schieberichtung (R) verlaufende, den herabfallenden Ballen (B) auffangende und tragende und in Abhängigkeit vom nachfolgenden, auf den unteren Ballen (B) fallenden oberen Ballen (B) über den Auslöser (6) entgegen der Fahrtrichtung (F) nach unten abschwenkende und die beiden aufeinanderliegenden Ballen (B) auf den Erdboden (E) abgebende Rutsche (7) vorgesehen.

Die Gleitschienen (5) und die Rutsche (7) sind in einem größer als die Ballenhöhe vorgesehenen Abstand übereinander horizontal verlaufend im Fahrwerksrahmen (3) angeordnet und in Längsrichtung jeweils in ein dem Presskanal (4) benachbartes vorderes Schienenteil (VS) und ein sich daran anschließendes hinteres Schienenteil (HS) aufgeteilt. Beide Schienenteile (VS, HS) sind gleich lang oder das hintere Schienenteil (HS) ist länger als das vordere Schienenteil (VS).

Die Schienenteile (VS, HS) der Gleitschienen (5) werden vom Auslöser (6) über später näher erläuterte Steuermittel gemeinsam entriegelt und vom Ballengewicht nach unten weggeschwenkt und nach jeder Ballen-Freigabe gemeinsam oder nacheinander in die Ballen-Tragstellung zurückgeschwenkt.

Die Rutsche (7) ist von einer um eine unter den vorderen Schienenteilen (VS) am Fahrwerksrahmen (3) angeordnete, quer zur Fahrtrichtung (F) verlaufende Schwenkachse (8) höhenverschwenkbaren Plattform (9) mit/ohne freilaufenden Ballen-Tragrollen (9a) gebildet.

Die Freigabe der Gleitschienen (5) und der Rutsche (7) erfolgt über den Auslöser (6) wegversetzt nacheinander, wobei der erste Ballen (B) nach Freigabe durch die Gleitschienen (5) auf einer Wurfparabel nach unten auf die Rutsche (7) fällt und der nachfolgende Ballen (B) nach erneuter Freigabe der Gleitschienen (5) auf den unteren Ballen (B) fällt und auf diesen unteren Ballen (B) einen zusätzlichen Verschiebeweg mit dem Auslöser (6) bis zum bündigen vorderen Ballenabschluß und zur Freigabe der Rutsche (7) aus ihrer horizontalen Ballen-Tragstellung in eine abgeschwenkte Ballen-Abrutschstellung für beide aufeinanderliegende Ballen (B) durchführt.

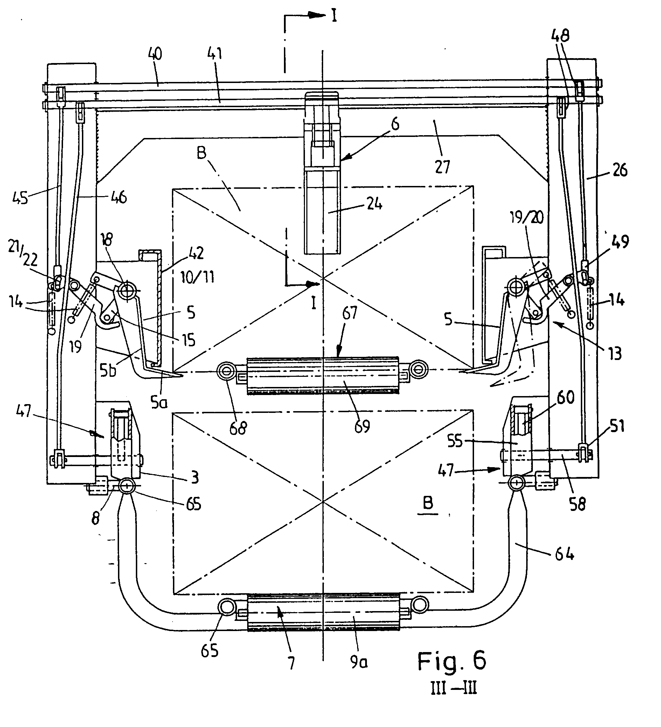

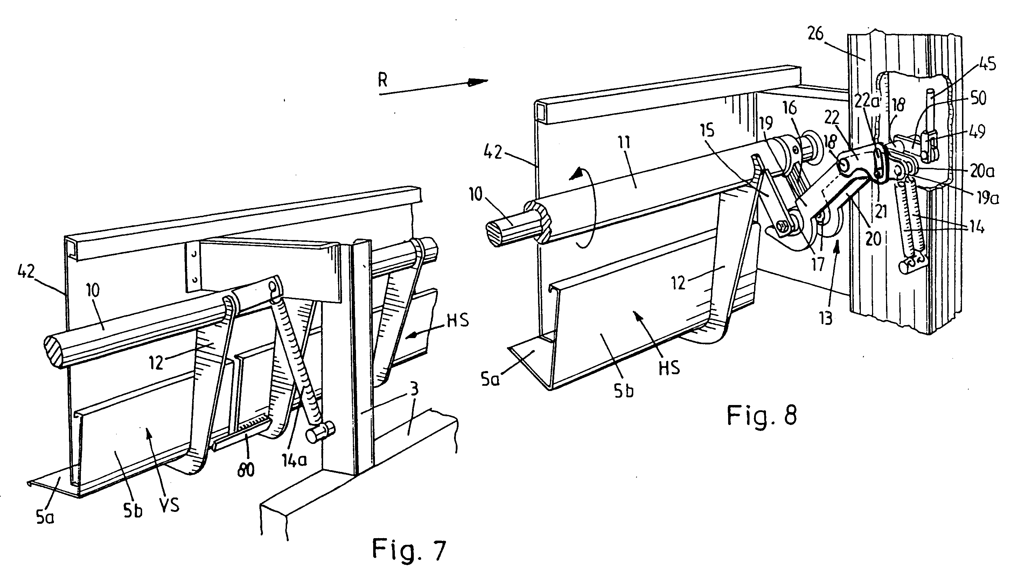

Das vordere und hintere Schienenteil (VS, HS) jeder der beiden seitlichen Gleitschienen (5) ist, wie in Fig. 6 bis 8 deutlich zu sehen, von einem Winkelprofil mit unterem auf den Ballen (B) zu gerichteten Tragschenkel (5a) und aufrechten Schwenkschenkeln (5b) gebildet und beiden Gleitschienen (5) sind mit ihren Schwenkschenkeln (5b) hinter einer seitlichen Ballen-Längsführung (42) an einer in Press- und Schieberichtung verlaufenden Schwenkachse (10, 11) gehalten und mit ihrem Tragschenkel (5a) unter der Ballen-Längsführung (42) in die Tragstellung herausschwenkbar (volle Linien in Fig. 6) und gegenüber dieser in die Ballen-Freigabestellung (strichpunktierte Linien in Fig. 6) nach unten und außen zurückschwenkbar.

Beide Schienenteile (VS, HS) zeigen an ihrer dem Ballen (B) abgewandten Außenseite versteifende Rippen (12) und sind mit diesen über die Schwenkschenkel (5b) hinausragenden Rippen (12) an der Schwenkachse (10, 11) befestigt.

Das vordere Schienenteil (VS) ist an einer eigenen Schwenkachse (10) in Wellenform und das hintere Schienenteil (HS) an einer eigenen, rohrförmigen und von der wellenförmigen Schwenkachse (10) des vorderen Schienenteiles (VS) durchfaßten Schwenkachse (11) festgelegt und beide koaxial ineinanderliegenden Schwenkachsen (10, 11) sind mit einem gemeinsamen Entriegelungsmechanismus (13) für die Verschwenkung in die Ballen-Freigabe-Stellung gekoppelt und stehen unter Einwirkung von Zugfedern (14, 14a) für die Verschwenkung in die Ballen-Tragstellung.

Der Entriegelungsmechanismus (13) ist im hinteren Endbereich jedes hinteren Schienenteiles (HS) angeordnet und weist
einen an der rohrförmigen Schwenkachse (11) des hinteren Schienenteiles (HS) und einen an der wellenförmigen Schwenkachse (10) des vorderen Schienenteiles (VS) befestigten Rasthebel (15, 16) mit freiendseitiger Rolle (17) auf.

Den beiden Rasthebeln (15, 16) sind zwei auf einer gemeinsamen Schwenkachse (18) am Fahrwerksrahmen (3) gelagerte und unter Einwirkung je einer Zugfeder (14) stehende, mit je einer Rolle (17) der Rasthebel (15, 16) zusammenwirkende Hakenhebel (19, 20) Zugeordnet. Beide Hakenhebel(19, 20) weisen einen über die gemeinsame Schwenkachse (18) hinausstehenden Fortsatz (19a, 20a) auf. Der Hakenhebel (19) für das hintere Schienenteil (HS) ist drehbar auf der Schwenkachse (18) vorgesehen und der Hakenhebel (20) für das vordere Schienenteil (VS) lagert verdrehfest auf der Schwenkachse (18). Der Fortsatz (19a) des Hakenhebels (19) für das hintere Schienenteil (HS) greift mit einem Zapfen (21) in ein bogenförmiges Langloch (22a) des Mitnahmehebels (22) des Hebelpaares (19, 15) für das hintere Schienenteil (HS) unter Mitnahmeverbindung für beide Schienenteile (VS, HS) zur Abschwenkung nach unten in die Ballen-Freigabestellung und für eine eigenständige Verschwenkung des vorderen Schienenteiles (VS) gegenüber dem hinteren Schienenteil (HS) nach oben in die Ballen-Tragstellung ein.

Am hinteren Schienenteil (HS) beider Gleitschienen (5) ist ein über den Stoß zwischen hinterem und vorderem Schienenteil (VS, HS) verlaufendes, ein freies Verschwenken des vorderen Schienenteiles (VS) nach oben in die Ballen-Tragstellung zulassender und ein zwangsläufiges Verschwenken beider Schienenteile (VS, HS) nach oben bewirkender Mitnehmer (80) in Leisten- oder Winkelprofilform befestigt.

Der Auslöser (6) besitzt einen im in Fahrtrichtung (F) hinteren Endbereich der Gleitschienen (5) oberhalb derselben angeordneten, in und entgegen der Press- und Schieberichtung (R) (R) auf einem begrenzten Hub verfahrbaren Schlitten (23) und einen daran gehaltenen, vertikal nach unten in den Bewegungsraum des Ballens (B) hineinragenden Anschlagarm (24).

Der mit seiner Längsrichtung in Press- und Schieberichtung verlaufende Schlitten (23) ist mittels Parallellenkern (25) unter einer am hinteren Ende des Fahrwerksrahmens (3) angeordneten, aus zwei seitlichen Ständern (26) und einem Querholm (27) gebildeten Brücke aufgehängt und mittels zwischen Lenkern (25) und dem Querholm (27) angreifender Zugfedern (28) entgegen der Press- und Schieberichtung (R) -in Fahrtrichtung (F)- nach dem Auslösehub zurückfahrbar. Weiterhin ist auf der Schwenkachse (18) ein Mitnahmehebel (22) verdrehfest gelagert.

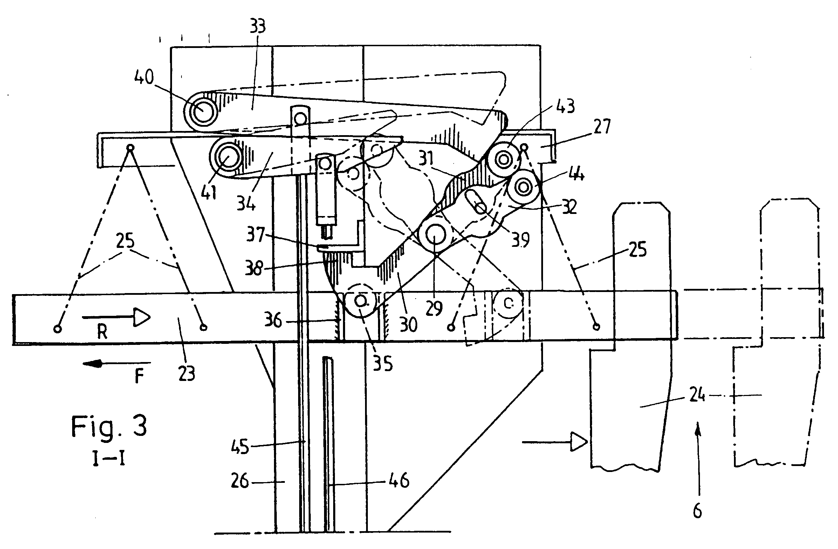

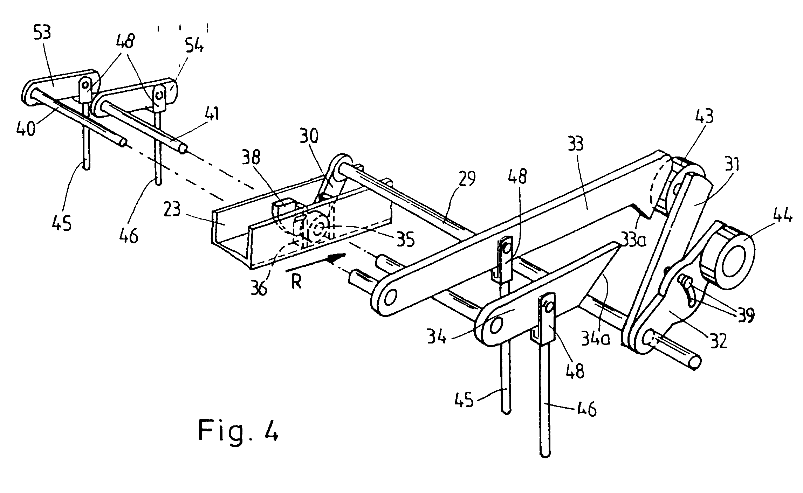

In dem Querholm (27) der Brücke lagert eine horizontale und quer zur Press- und Schieberichtung (R) verlaufende Steuerwelle (29), die einerseits mit einem vom verfahrbaren Schlitten (23) verschwenkbaren Triebhebel (30) verdrehfest verbunden und andererseits zwei einarmige Schalthebel (31, 32) aufnimmt, welche bei der Wellenverdrehung wegversetzt nacheinander mit zwei schwenkbaren Hubhebeln (33, 34) für die Entriegelung der Gleitschienen (5) und der Rutsche (7) zusammenwirken (Fig. 3 und 4).

Der Triebhebel (30) ist als Winkelhebel ausgebildet, sitzt mit einem Hebelende verdrehfest auf der Steuerwelle (29), greift im Winkelscheitelpunkt mit einer Rolle (35) in Mitnehmer (36) des Schlittens (23) zur Triebhebelverschwenkung kraftschlüssig ein und bildet mit seinem anderen Hebelende einen mit einem Widerlager (37) des Brücken-Querholmes (27) zusammenwirkenden Verfahrbegrenzungsanschlag (38) für den in Fahrtrichtung (F) in die Ausgangsstellung zurückfahrenden Schlitten (23).

Der Schalthebel (31) für die Entriegelung der Gleitschienen (5) sitzt mit einem Ende verdrehfest auf der Steuerwelle (29), und der Schalthebel (32) für die Entriegelung der Rutsche (7) lagert mit einem Ende schwenkbar um die Steuerwelle (29) und ist über eine Langloch-Schraubenverbindung (39) zur wegversetzten Entriegelung der Rutsche (7) gegenüber den Gleitschienen (5) in einem begrenzten Weg stufenlos gegenüber dem Gleischienen-Schalthebel (31) verstellbar und mit diesem bewegungsstarr verbunden, so daß beide Hebel (31, 32) gemeinsam verschwenken, aber nacheinander schalten.

Die beiden Hubhebel (33, 34) sind von einarmigen, mit einem Ende auf je einer horizontalen und quer zur Press- und Schieberichtung (R) verlaufenden und in den Brückenständern (26) gelagerten Welle (40, 41) verdrehfest sitzenden Hebeln gebildet, die an ihrem freien Hebelende je eine Auflauffläche (33a, 34a) für eine Rolle (43, 44) der Schalthebel (31, 32) aufweisen.

Die Schalt- und Hubhebel (31 bis 34) sind in einem seitlichen Brückenständer (26) angeordnet und die beiden Hubhebel (33, 34) über je eine im seitlichen Brückenständer (26) verlaufende, vertikale Zugstange (45, 46) mit dem Entriegelungsmechanismus (13/47) der Gleitschienen (5) und der Rutsche (7) gekoppelt.

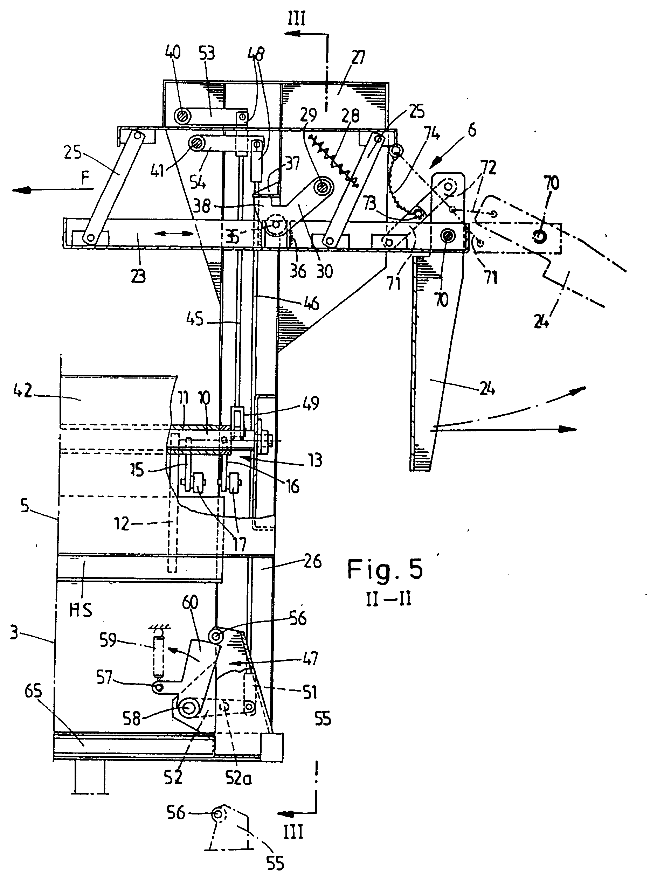

Beide Zugstangen (45, 46) greifen mit ihrem oberen Ende mittels je eines Gabelteiles (48) an je einem Hubhebel (33, 34) gelenkig an. Die Zugstange (45) für die Gleitschienenentriegelung ist mit einem Gabelteil (49) an einem an der Schwenkachse (18) der Hakenhebel (19, 20) befestigten Hebelarm (50) und die Zugstange (46) für die Rutschenentriegelung mit einem Gabelteil (51) an einem Schwenkhebel (52) des Entriegelungsmechanismusses (47) der Rutsche (7) gelenkig gelagert (Fig. 5, 6 und 8).

Es besteht auch die Möglichkeit, die Zustange (45) mit ihrem Gabelteil (49) direkt am Fortsatz (20a) des Hakenhebels (20) anzulenken.

In bevorzugter Weise sind die Schalt- und Hubhebel (31 bis 34) nur in einem Brückenständer (26) angeordnet und in dem zweiten Brückenständer (26) verlaufen zwei Zugstangen (45, 44) für die Entriegelung der Gleitschienen (5) und Rutsche (7), welche mit ihrem oberen Ende über je ein Gabelteil (48) an verdrehfest auf den Hubhebelwellen (40, 41) sitzenden Hubhebel (53, 54) gelenkig lagern und mit ihrem unteren Ende über Gabelteile (49, 51) mit den beiden Entriegelungsmechanismen (13, 47) verbunden sind (Fig. 4, 5 und 6).

Der in beiden Seiten der Rutsche (7) angeordnete Entriegelungsmechanismus (47) zeigt einen auf der Rutsche (7) festgelegten gabelartigen Riegel (55) mit Riegelbolzen (56) und hat ein um eine Schwenkachse (57) am Fahrwerksrahmen (3) schwenkbar gelagertes, bewegungsmäßig in einer Schwenkachse (58) mit dem Schwenkhebel (52) verbundenes und mittels einer Zugfeder (59) gegen den Riegelbolzen (56) verschwenkbares und gehaltenes Sperrstück (60).

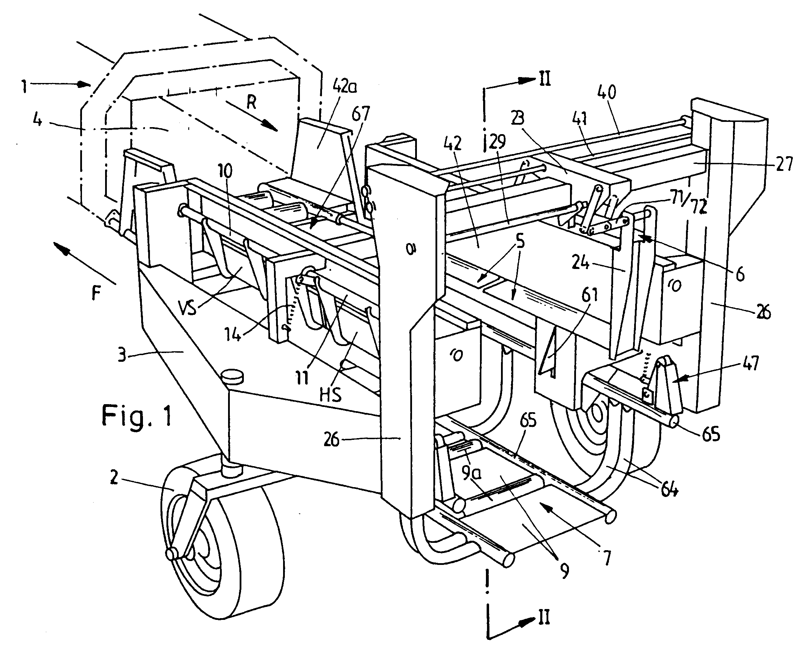

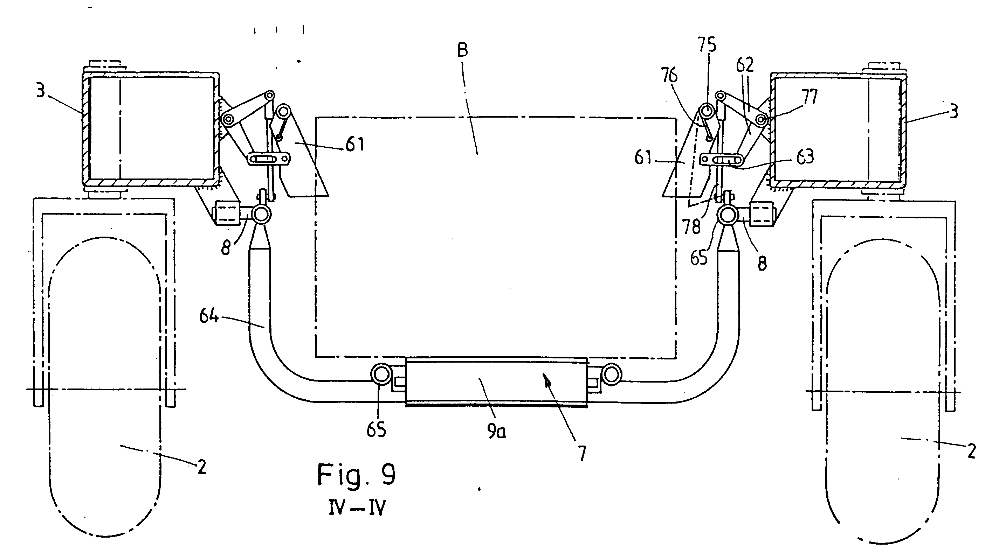

Der Rutsche (7) ist an beiden Seiten jeweils mindestens ein federbelasteter, in die Flanken des herunterfallenden Ballens (B) zur Lagefixierung desselben auf der Rutsche (7) eingreifender Rückhalter (61) in Keilblechform zugeordnet (Fig. 1 und 9).

Jeder Rückhalter (61) ist über ein Hebelgestänge (62) mit der Rutsche (7) verbunden und in Abhängigkeit von der nach unten abschwenkenden Rutsche (7) durch das Hebelgestänge (62) aus dem Ballen (B) herausziehbar; eine Langlochführung (63) im Hebelgestänge (62) gestattet die durch Federkraft (76) auf dem Ballen (B) zu erfolgende freie Bewegung des Rückhalters (61) und das Hebelgestänge (62) wirkt nur bei herabschwenkender Rutsche (7) und zieht dann den Rückhalter (61) zurück. Der Rückhalter (61) lagert mit seiner in Press- und Schieberichtung (R) verlaufenden Schwenkachse (75) am Fahrwerksrahmen (3) und um diese Schwenkachse (75) ist eine Feder (76) angeordnet. Das Hebelgestänge (62) ist gelenkig an dem Fahrwerksrahmen (3) in der Achse (77) gehalten und greift mit einer Zugstange (78) an einem oberen Holm (65) der Rutsche (7) an.

Beim Absenken der Rutsche (7) zieht dann die Zugstange (78) über das Hebelgestänge (62) die Langlochführung (63) mit Rückhalter (61) aus dem Ballen (B) heraus und der Rückhalter (61) schwenkt um seine Achse (75) entgegen der Federkraft zurück.

Die Rutsche (7) hat eine Rinnenform und setzt sich aus mehreren U-Bügeln (64), Längsholmen (65) und der im U-Steg-Bereich angeordneten Plattform (9) mit den Tragrollen (9a) zusammen; auf den oberen Längsholmen (65) ist am hinteren Ende je ein Riegel (55) des Entriegelungsmechanismusses (47) befestigt. Die Rutsche (7) lagert mit ihren oberen Längsholmen (65) um eine waagerechte Achse (8) im Fahrwerksrahmen (3) schwenkbar und steht mit einer die Rutsche (7) nach oben in die Ballen-Auffangstellung zurückschwenkenden Druckorgan (66), wie Hydraulikzylinder, in Verbindung.

Im Fahrwerksrahmen (3) ist zwischen Presskanal (4) und vorderen Schienenteil (VS) der Gleitschienen (5) eine in Press- und Schieberichtung (R) auf unterschiedliche Ballenlängen einstellbare Zwischenrutsche (67) angeordnet, welche aus teleskopartig ineinandergreifenden Längsrohren (68) und dazwischen freilaufend gelagerten Ballen-Tragrollen (69) gebildet ist.

Der Anschlagarm (24) des Auslösers (6) ist -wie Fig. 5 zeigtam Schlitten (23) um eine horizontale, quer zur Press- und Schieberichtung (R) verlaufenden Achse (70) höhenverschwenkbar gelagert und mit einer Überlastsicherung ausgestattet, die den Anschlagarm (24) in der vertikalen Arbeitsstellung hält und bei überhöhter Druckkraft durch den Ballen (B) den Anschlagarm (24) in Press- und Schieberichtung (R) nach oben wegschwenken läßt.

Die Überlastsicherung ist von zwei zwischen Schlitten (23) und Anschlagarm (24) gelenkig angreifenden Gelenkhebeln (71, 72) und einem in der Hebelgelenkachse (73) angreifenden Zugglied (74), wie Seil, Kette o. dgl. gebildet. Die beiden Gelenkhebel (71, 72) nehmen eine Totpunktlage ein (sind gestreckt) und halten damit den Anschlagarm (24) in der vertikalen Funktionsstellung. Bei überhöhter Druckkraft auf den Anschlagarm (24) wird der Schlitten (23) in Press- und Schieberichtung (R) über den Auslösebereich hinaus verschoben und dadurch das Zugglied (74) gespannt, wodurch die Hebel (71, 72) aus ihrer Totpunktlage heraus eingeknickt werden und den Anschlagarm (24) zum Hochschwenken freigeben.

Das Ballenstapeln läuft folgendermaßen ab:

Im Ausgangszustand ist der Ballenstapler leer und die Gleitschienen (5) sind in ihre Ballen-Tragstellung hochgeschwenkt.

Die Zwischenrutsche (67), auf der die Ballen (B) vom Presskanal (4) zu den Gleitschienen (5) des Ballenstaplers geführt werden, wird auf die jeweilige Ballenlänge eingestellt. Dieses ist erforderlich, damit die Ballen (B) eine stabile und kantige Form erhalten; nach dem Austreten der Ballen (B) aus dem Presskanal (4) tritt in den Ballen (B) eine Expansion auf, und die Ballen (B) dehnen sich soweit aus, bis ihr kantiger Querschnitt von den sie umgehenden Schnüren o. dgl. fest umschlossen wird. Hierfür ist der Durchlaufweg auf der Zwischenrutsche (67) notwendig, da sonst die lockeren Ballen (B) zwischen Presskanal (4) und Gleitschienen (5) nach unten absacken würden.

Die Zwischenrutsche (67) wird durch Verschieben ihrer Teleskoprohre (68) mehr oder weniger weit auseinandergezogen oder zusammengeschoben, so daß die Tragrollen (69) entsprechend der Ballenlänge ihren Abstand zu den Gleitschienen (5) einnehmen.

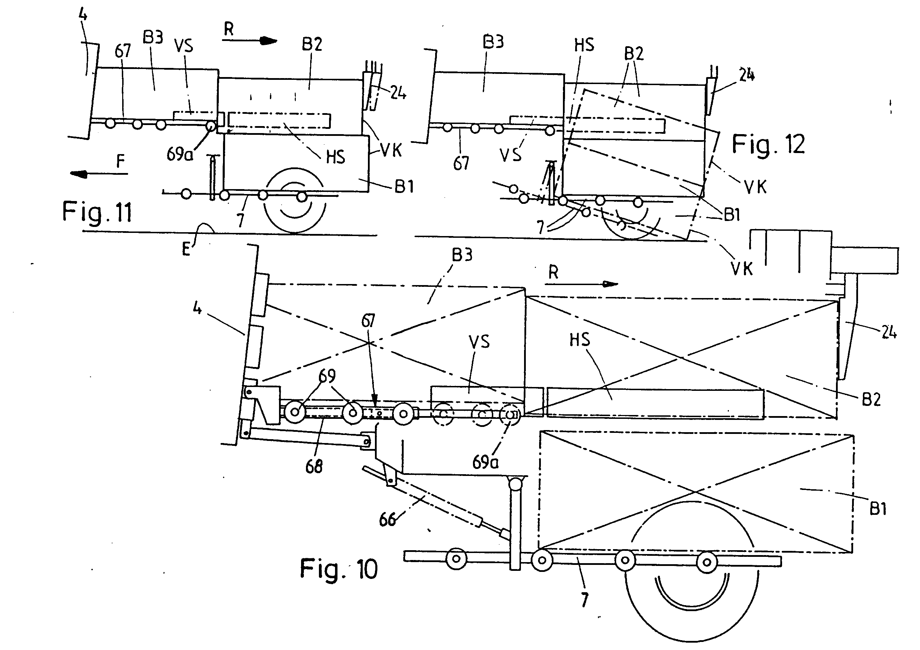

In den Fig. 11 und 12 ist die Zwischenrutsche (67) mit ihrer äußersten Tragrolle (69a) bis über die vorderen Schienenteile (VS) ausgezogen und in Fig. 10 sind mehrere Stellungen der äußersten Tragrolle (69) in strich-punktierten Linien dargestellt.

Die Tragrollen (69) der Zwischenrutsche (67) vermindern die Reibung des Ballens (B) beim Schieben auf der Rutsche (67).

Der erste Ballen (B 1) wird von der Zwischenrutsche (67) auf die Gleitschienen (5) geschoben und wird durch den nachfolgenden Ballen (B 2) gegen den Anschlagarm (24) geschoben und drückt den Anschlagarm (24) in Press- und Schieberichtung (R) auf einem gewissen Hub weiter (Fig. 10).

Hierbei wird der Schlitten (23) des Auslösers (6) über die Lenker (25) und entgegen der Federkraft (28) verschoben und der damit kraftschlüssig gekoppelte Triebhebel (30) verschwenkt, und der Triebhebel (30) verdreht dabei die Steuerwelle (29), die wiederum die beiden Schalthebel (31, 32) mitnimmt und verschwenkt.

Jetzt betätigt der sich verschwenkende Schalthebel (31) den Hubhebel (33) und dieser wird nach oben geschwenkt und seine Welle (40) verdreht, die wiederum ihrerseits ihren Hubhebel (53) auf der anderen Seite des Staplers höhenverschwenkt, wodurch in beiden Ballenseiten eine Gleichlaufsteuerung für die Gleitschienen (5) entsteht.

Durch die hochschwenkenden Hubhebel (33, 53) werden über die Zugstangen (45) die Entriegelungsmechanismen (13) für die Gleitschienen (5) entriegelt, in dem die Schwenkachse (18) über den Hebel (50) verdreht oder beim Angriff der Zugstange (45) am Fortsatz (20a) die Schwenkachse (18) durch den Fortsatz (20a) verdreht wird und dadurch der Hebel (20) verschwenkt. Über den verdrehfest auf der Achse (18) sitzenden Mitnahmehebel (22) und die Langloch-Zapfverbindung (22a, 21) wird auch der drehbar auf der Schwenkachse (18) lagernde Hebel (19) mitgenommen und dadurch werden beide Hebel (19, 20) nach außen entgegen der Federkraft (14) verschwenkt, so daß die Rollen (17) der Rasthebel (15, 16) frei werden und die Schwenkachse (10, 11) der Schienenteile (VS, HS) frei wird.

Durch das Gewicht des Ballens (B 1) werden nun die Schienenteile (VS, HS) um ihre Schwenkachse (10, 11) nach unten und außen verschwenkt (strich-punktierte Darstellung auf der rechten Seite in Fig. 6) und der Ballen (B 1) kann nach unten auf die Rutsche (7) fallen (Fig. 10 untere Ballenlage). Hierbei fällt der Ballen (B 1) auf einer Wurfparabel nach unten, die bedingt durch das Weiterfahren des Ballenstaplers entsteht. Beim Herunterfallen greifen die durch ihre Federkraft (76) nach außen gehaltenen Rückhalter (61) lagefixierend in die Seiten des Ballens (B 1) ein (Fig. 9)

Jetst sind die Gleitschienen (5) unbelastet und werden durch ihre Zugfedern (14a) wieder nach oben in die Ballentragstellung zurückgeschwenkt, und der Schlitten (23) fährt durch die Federn (28) der Lenker (25) gezogen wieder in die Ausgangsstellung zurück (Fig. 5).
Die Schalthebel (32) sind zwar mitverschwenkt worden, haben jedoch aufgrund des noch nicht ausreichenden Hubes des Schlittens (23) noch keine Wirkung und die Schalthebel (34) noch nicht betätigt.

Der nachfolgende zweite Ballen (B 2) wird vom dritten Ballen (B 3) auf die Gleitschienen (5) geschoben und gegen den Anschlagarm (24) gedrückt, wobei dieser Anschlagarm (24) ebenfalls wieder einen Hub in Press- und Schieberichtung (R) durchführt und die Gleitschienen (5) wieder -wie vorher beschrieben- entriegelt. Der zweite Ballen (B 2) fällt auf den unteren ersten Ballen (B 1), aufgrund der Wurfparabel liegt dieser aber mit seiner in Fallrichtung vorderen Kante (VK) nicht bündig zur Vorderkante (VK) des unteren Ballens (B 1), sondern um ein gewisses Maß zurückversetzt (Fig. 11).

Dieser zweite Ballen (B 2) wird nunmehr vom dritten Ballen (B 3) auf dem ersten Ballen (B 1) weiter verschoben und zwar soweit, bis die Vorderkanten (VK) beider Ballen (B 1, B 2) bündig (in einer senkrechten Ebene) liegen; der Anschlagarm (24) wird dementsprechend mitgenommen, der über die Steuerwelle (29) nunmehr den Schalthebel (32) gegen den Hubhebel (34) verschwenkt, so daß der Hubhebel (34) hochgeschwenkt wird und über die Zugstangen (46) den Entriegelungsmechanismus (47) für die Rutsche (7) betätigt.

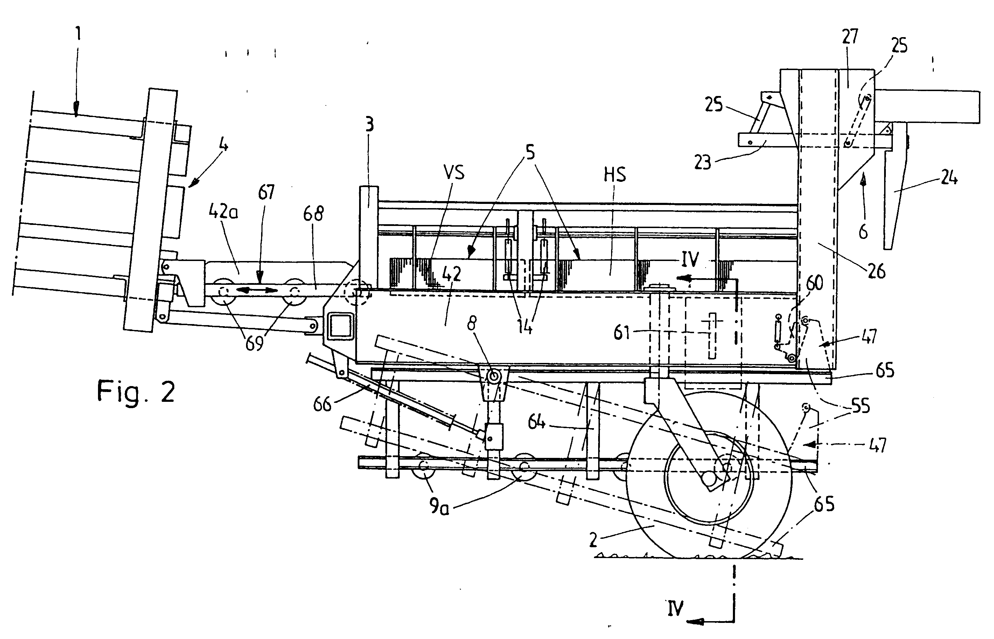

Die Zugstange (46) verschwenkt den Hebel (52) um seine Schwenkachse (52a) am Fahrwerksrahmen (3), wodurch das Sperrstück (60) entgegen seiner Federspannung (59) um seine Achse (58) am Fahrwerksrahmen (3) in Pfeilrichtung gemäß Fig. 5 verschwenkt wird und den Riegelbolzen (56) des gabelförmigen Riegels (55) der Rutsche (7) freigibt, so daß die Rutsche (7) um ihre Schwenkachse (8) am Fahrwerksrahmen (3) nach unten schwenken kann (Fig. 2 und 12 strich-punktierte Rutschen- und Ballenstellung) und die aufeinanderliegenden Ballen (B 1, B 2) von der Rutsche (7) auf den Erdboden (E) aufgrund des Bodenkontaktes abrutschen können und dann bündig übereinanderliegen.

Nachdem die Ballen (B 1, B 2) den Stapler verlassen haben, schwenken die Rückhalter (61) wieder nach innen in die Wirkstellung. Gleichzeitig wird die Rutsche (7) über ihr Druckorgan (66) wieder nach oben in die Auffangstellung verschwenkt. Dieser Ballenstapelvorgang wiederholt sich kontinuierlich, da nach dem Abrutschen der beiden Ballen (B 1, B 2) bereits der dritte Ballen (B 3) auf die Gleitschienen (5) geschoben wird.

Die Längsführungen (42) bewirken eine einwandfreie Schiebeführung und senkrechte, im Bereich der Rückhalter (61) angeordnete Leitbleche (79) eine kontrollierte Fallführung der Ballen (B).

Der entstehenden Fallversatz zwischen unteren und oberen Ballen (B 1, B 2) läßt sich durch die Langloch-Schraubenverbindung (39) zwischen beiden Schalthebeln (31, 32) einstellen.

Um nicht mit dem Schließen (Hochschwenken) der Leitbleche (5) zu warten, bis der Ballenstapel (B 1, B 2) den Stapler komplett verlassen hat, sind die Leitbleche (5) in ein Vorder- und Hinterteil (VS, HS) aufgeteilt und die vorderen Schienenteile (VS) können unabhängig von den hinteren Schienenteilen (HS) schließen und so den von der Zwischenrutsche (67) kommenden Ballen (B 3) frühzeitig führen.

Dieses unabhängige Hochschwenken der vorderen Schienenteile (VS) wird durch die Langloch-Zapfenverbindung (21, 22a) des Hebels (19) mit Mintahmehebel (22) erreicht, in dem dieser gegenüber der Schwenkachse (18) in einem gewissen Schwenkbereich frei ist, wenn der Hebel (20) schon zurückschwenkt. Der Hebel (19) läuft praktisch dann dem Hebel (20) nach.

Würde der aus dem Presskanal (4) austretende Ballen (B) nicht seine richtige Pressdichte haben, würde er zwischen den vorderen Schienenteilen (VS) nach unten absacken, so daß die vorderen Schienenteile (VS) nicht hochschwenken können. Durch die Mitnehmer (80) können auch die hinteren Schienenteile (HS) nicht hochschwenken.

Dadurch werden Störungen im Stapelbetrieb ausgeschlossen, was auch noch durch die Zwischenrutsche (67) für den Ballen -Expansionsweg- begünstigt wird.

Durch Kontrollorgane wird dem Bedienungspersonal eine Störung angezeigt.

Der Zwischenrutsche (67) sind ebenfalls beidseitig Ballen-Längsführungen (42a) zugeordnet.

Als zusätzliche Sicherheit für den auf der Wurfparabel von den Gleitschienen (5) auf die Rutsche (7) fallenden Ballen (B) sind an den Brückenständern (26) am hinteren Stirnende zwei um je eine vertikale Achse (81) vor die Stirnseite (Vorderkante VK) des Ballens (B) aufeinander zu und auseinander schwenkende Rückhalteklappen (82) vorgesehen, wodurch die Wurfparabel in einem gewissen Bereich begrenzt wird, der dem Verstellbereich der beiden Schalthebel (31, 32) entspricht. Die Entriegelung dieser beiden Rückhalteklappen (82) erfolgt durch einen dem Rutschen-Entriegelungsmechanismus (47) entsprechenden und dieser Entriegelungsmechanismus ist mit der Rutsche (7) gekoppelt, so daß bei der abschwenkenden Rutsche (7) auch die Klappen (82) nach außen aufschwenken.
Die Klappen (82) werden durch Zugfedern (83) wieder in ihre Rückhaltestellung zurückgeschwenkt.

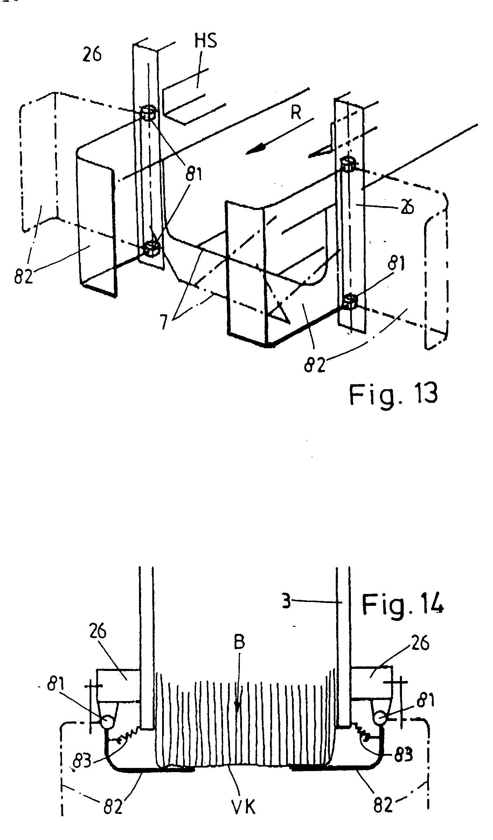

In Fig. 13 und 14 sind in vollen Linien die Rückhalteklappen (82) in ihrer eingeschwenkten Rückhaltestellung und in strichpunktierten Linien in der aufgeschwenkten Ballen-Freigabestellung gezeigt.

## Patentansprüche

1. Fahrbarer Ballenstapler für Vierkantballen (B), welcher als Nachlaufgerät mit einer Ballenpresse (1) lösbar gekoppelt ist, und
- einen von Rädern (2) getragenen Fahrwerksrahmen (3),
- zwei obere, den aus dem Presskanal (4) der Ballenpresse (1) austretenden Ballen (B) beidseitig in Press- und Schieberichtung (R) tragende Gleitschienen (5), die in Abhängigkeit vom Ballen (B) über einen Auslöser (6) nach unten seitlich wegschwenken und den Ballen (B) nach unten freigeben,
- eine mit Abstand unterhalb der Gleitschienen (5) in Press- und Schieberichtung (R) verlaufende, den herabfallenden Ballen (B) auffangende und tragende und in Abhängigkeit vom nachfolgenden, auf den unteren Ballen (B) fallenden oberen Ballen (B) über den Auslöser (6) entgegen der Fahrtrichtung (F) nach unten abschwenkende und die beiden aufeinanderliegenden Ballen (B) auf den Erdboden abgebende Rutsche (7),
aufweist,
dadurch gekennzeichnet, daß
- die Gleitschienen (5) und die Rutsche (7) in einem größer als die Ballenhöhe vorgesehenen Abstand übereinander horizontal verlaufend im Fahrwerksrahmen (3) angeordnet sind,
- die Gleitschienen (5) in Längsrichtung jeweils in ein dem Presskanal (4) benachbartes vorderes Schienenteil (VS) und ein sich daran anschließendes hinteres Schienenteil (HS) aufgeteilt sind,
- die Schienenteile (VS, HS) der Gleitschienen (5) vom Auslöser (6) über Steuermittel gemeinsam entriegelbar und vom Ballengewicht nach unten wegschwenkbar und nach jeder Ballen-Freigabe gemeinsam oder nacheinander in die Ballen-Tragstellung zurückschwenkbar sind,
- die Rutsche (7) von einer um eine unter den vorderen Schienenteilen (VS) angeordnete, quer zur Fahrtrichtung (F) verlaufende Schwenkachse (8) höhenverschwenkbaren Plattform (9) mit/ohne freilaufenden Ballen-Tragrollen (9a) gebildet ist,
und
- die Freigabe der Gleitschienen (5) und der Rutsche (7) über den Auslöser wegversetzt nacheinander erfolgt, wobei der erste Ballen (B 1) nach Freigabe durch die Gleitschienen (5) auf einer Wurfparabel nach unten auf die Rutsche (7) fällt und der nachfolgende Ballen (B 2) nach erneuter Freigabe der Gleitschienen (5) auf den unteren Ballen (B 1) fällt und auf diesen unteren Ballen (B 1) einen zusätzlichen Verschiebeweg mit dem Auslöser (6) bis zum bündigen vorderen Ballenabschluß und zur Freigabe der Rutsche (7) aus ihrer horizontalen Ballen-Tragstellung in eine abgeschwenkte Ballen-Abrutschstellung für beide aufeinanderliegende Ballen (B 1, B 2) durchführt.

2. Ballenstapler nach Anspruch 1, dadurch gekennzeichnet, daß das vordere und hintere Schienenteil (VS, HS) jeder der beiden seitlichen Gleitschienen (5) von einem Winkelprofil mit unterem auf den Ballen (B) zu gerichteten Tragschenkel (5a) und aufrechten Schwenkschenkeln (5b) gebildet ist und beide Gleitschienen (5) mit ihren Schwenkschenkeln (5b) hinter einer seitlichen Ballen-Längsführung (42) an einer in Press- und Schieberichtung (R) verlaufenden Schwenkachse (10, 11) schwenkbar lagern und mit ihrem Tragschenkel (5a) unter der Ballen-Längsführung (42) in die Tragstellung herausschwenkbar und gegenüber dieser in die Ballen-Freigabestellung nach unten und außen zurückschwenkbar sind.

3. Ballenstapler nach Anspruch 1 oder 2, dadurch gekennzeichnet, daß das vordere Schienenteil (VS) mit aussteifenden außenliegenden und nach oben über die Schwenkschenkel (5b) hinausragenden Rippen (12) an einer eigenen Schwenkachse (10) in Wellenform und das hintere Schienenteil (HS) mit aussteifenden außenliegenden und nach oben über die Schwenkschenkel (5b) hinausragenden Rippen (12) an einer eigenen, rohrförmigen und von der wellenförmigen Schwenkachse (10) des vorderen Schienenteiles (VS) durchfassenden Schwenkachse (11) festgelegt sind und beide koaxial ineinanderliegenden Schwenkachsen (10, 11) mit einem gemeinsamen Entriegelungsmechanismus (13) für die Verschwenkung in die Ballen-Freigabe-Stellung gekoppelt sind und unter Einwirkung von Zugfedern (14a) für die Verschwenkung in die Ballen-Tragstellung stehen.

4. Ballenstapler nach einem der Ansprüche 1 bis 3, dadurch gekennzeichnet, daß der Entriegelungsmechanismus (13) im hinteren Endbereich jedes hinteren Schienenteiles (HS) angeordnet ist und dabei
- einen an der rohrförmigen Schwenkachse (11) des hinteren Schienenteiles (HS) und einem an der wellenförmigen Schwenkachse (10) des vorderen Schienenteiles (VS) befestigten Rasthebel (15, 16) mit freiendseitiger Rolle (17)
und
- zwei beiden Rasthebeln (15, 16) zugeordnete, auf einer gemeinsamen Schwenkachse (18) am Fahrwerksrahmen (3) angeordnete und unter Einwirkung je einer Zugfeder (14) stehende, mit je einer Rolle (17) der Rasthebel (15, 16) zusammenwirkende Hakenhebel (19, 20) mit je einem über die gemeinsame Schwenkachse (18) hinausstehenden Fortsatz (19a, 20a),
aufweist,
wobei der Hakenhebel (19) für das hintere Schienenteil (HS) drehbar auf der Schwenkachse (18) und der Hakenhebel (20) für das vordere Schienenteil (VS) drehfest auf der Schwenkachse (18) sitzt, und der Fortsatz (19a) des Hakenhebels (19) für das hintere Schienenteil (HS ) mit einem Zapfen (21) in ein bogenförmiges Langloch (22a) eines auf der Schwenkachse (18) verdrehfest sitzenden Mitnahmehebels (22) für das hintere Schienenteil (HS) unter Mitnahmeverbindung für beide Schienenteile (VS, HS) zur Abschwenkung nach unten in die Ballen-Freigabestellung und für eine eigenständige Verschwenkung des vorderen Schienenteiles (VS) gegenüber dem hinteren Schienenteil (HS) nach oben in die Ballen-Tragstellung eingreift.

5. Ballenstapler nach einem der Ansprüche 1 bis 4, dadurch gekennzeichnet, daß am hinteren Schienenteil (HS) beider Gleitschienen (5) ein über den Stoß zwischen hinterem und vorderem Schienenteil (HS, VS) verlaufendes, ein freies Verschwenken des vorderen Schienenteiles (VS) nach oben in die Ballen-Tragstellung zulassender und ein zwangsläufiges Verschwenken beider Schienenteile (VS, HS) nach oben bewirkender Mitnehmer (80) in Leisten- oder Profilform befestigt ist.

6. Ballenstapler nach einem der Ansprüche 1 bis 5, dadurch gekennzeichnet, daß das vordere Schienenteil (VS) gleichlang oder kürzer als das hintere Schienenteil (HS) ist.

7. Ballenstapler nach einem der Ansprüche 1 bis 6, dadurch gekennzeichnet, daß der Auslöser (6) einen im in Fahrtrichtung (F) hinteren Endbereich der Gleitschienen (5) oberhalb derselben angeordneten, in und entgegen der Press- und Schieberichtung (R) auf einem begrenzten Hub verfahrbaren Schlitten (23) und einen daran gehaltenen, vertikal nach unten in den Bewegungsraum des Ballens (B) hineinragenden Anschlagarm (24) aufweist.

8. Ballenstapler nach einem der Ansprüche 1 bis 7, dadurch gekennzeichnet, daß der mit seiner Längsrichtung in Press- und Schieberichtung (R) verlaufende Schlitten (23) mittels Parallellenkern (25) unter einer am hinteren Ende des Fahrwerksrahmens (3) angeordneten, aus zwei seitlichen Ständern (26) und einem Querholm (27) gebildeten Brücke aufgehängt ist und mittels zwischen Lenkern (25) und dem Querholm (27) angreifender Zugfedern (28) entgegen der Press- und Schieberichtung (R) -in Fahrtrichtung (F)- nach dem Auslösehub zurückfahrbar ist.

9. Ballenstapler nach einem der Ansprüche 1 bis 8, dadurch gekennzeichnet, daß in dem Querholm (27) eine horizontale und quer zur Press- und Schieberichtung (R) verlaufende Steuerwelle (29) gelagert ist, die einerseits mit einem vom verfahrbaren Schlitten (23) verschwenkbaren Triebhebel (30) verdrehfest verbunden und andererseits zwei einarmige Schalthebel (31, 32) aufnimmt, welche bei der Wellenverdrehung wegversetzt nacheinander mit zwei schwenkbaren Hubhebeln (33, 34) für die Entriegelung der Gleitschienen (5) und der Rutsche (7) zusammenwirken.

10. Ballenstapler nach einem der Ansprüche 1 bis 9, dadurch gekennzeichnet, daß der Triebhebel (30) als Winkelhebel ausgebildet ist, mit einem Hebelende verdrehfest auf der Steuerwelle (29) sitzt, im Winkelscheitelpunkt mit einer Rolle (35) in Mitnehmer (36) des Schlittens (23) zur Triebhebelverschwenkung kraftschlüssig eingreift und mit seinem anderen Hebelende einen mit einem Widerlager des Brücken-Querholmes (27) zusammenwirkenden Verfahrbegrenzungsanschlag (38) für den in Fahrtrichtung (F) in die Ausgangsstellung zurückfahrenden Schlitten (23) bildet.

11. Ballenstapler nach einem der Ansprüche 1 bis 10, dadurch gekennzeichnet, daß der Schalthebel (31) für die Entriegelung der Gleitschienen (5) mit einem Ende verdrehfest auf der Steuerwelle (29) sitzt und der Schalthebel (32) für die Entriegelung der Rutsche (7) mit einem Ende schwenkbar um die Steuerwelle (29) lagert und über eine Langloch-Schraubenverbindung (39) zur wegversetzten Entriegelung der Rutsche (7) gegenüber den Gleitschienen (5) in einem begrenzten Weg stufenlos gegenüber dem Gleitschienen-Schalthebel (33) verstellbar und mit diesem bewegungsstarr verbunden ist.

12. Ballenstapler nach einem der Ansprüche 1 bis 11, dadurch gekennzeichnet, daß die beiden Hubhebel (33, 34) von einarmigen, mit einem Ende auf je einer horizontalen und quer zur Press- und Schieberichtung (R) verlaufenden und in den Brückenständern (26) gelagerten Welle (40, 41) verdrehfest sitzenden Hebeln gebildet sind, die an ihrem freien Hebelende je eine Auflauffläche (33a, 34a) für eine Rolle (43, 44) der Schalthebel (31, 32) aufweisen.

13. Ballenstapler nach einem der Ansprüche 1 bis 12, dadurch gekennzeichnet, daß die Schalt- und Hubhebel (31,32/33,34) in einem seitlichen Brückenständer (26) angeordnet sind und die beiden Hubhebel (33, 34) über je eine im seitlichen Brückenständer (26) verlaufende, vertikale Zugstange (45, 46) mit dem Entriegelungsmechanismus (13/47) der Gleitschienen (5) und der Rutsche (7) gekoppelt sind.

14. Ballenstapler nach einem der Ansprüche 1 bis 13, dadurch gekennzeichnet, daß beide Zugstangen (45, 46) mit ihrem oberen Ende mittels eines Gabelteiles (48) an je einem Hubhebel (33, 34) gelenkig angreifen die Zugstange (45) für die Gleitschienenentriegelung mit einem untenendigen Gabelteil (49) an einem an der Schwenkachse (18) der Hakenhebel (19, 20) befestigten Hebelarm (50) und die Zugstange (46) für die Rutschenentriegelung (47) mit einem untenendigen Gabelteil (51) an einem Schwenkhebel (52) des Entriegelungsmechanismusses (47) der Rutsche (7) gelenkig gelagert ist.

15. Ballenstapler nach einem der Ansprüche 1 bis 14, dadurch gekennzeichnet, daß in dem zweiten Brückenständer (26) zwei Zugstangen (45, 46) für die Entriegelung der Gleitschienen (5) und Rutsche (7) verlaufen, welche mit ihrem oberen Ende über je in Gabelteil (48) an verdrehfest auf den Hubhebelwellen (40, 41) sitzenden Hubhebeln (53, 54) gelenkig lagern und mit ihrem unteren Ende über Gabelteile (49, 51) mit den beiden Entriegelungsmechanismen (13/47) verbunden sind.

16. Ballenstapler nach einem der Ansprüche 1 bis 15, dadurch gekennzeichnet, daß der in beiden Seiten der Rutsche (7) angeordnete Entriegelungsmechanismus (47) einen auf der Rutsche (7) festgelegten gabelartigen Riegel (55) mit Riegelbolzen (56) und ein um eine Schwenkachse (57) am Fahrwerksrahmen (3) schwenkbar gelagertes, bewegungsmäßig in einer Schwenkachse (58) mit dem Schwenkhebel (52) verbundenes und mittels einer Zugfeder (59) gegen den Riegelbolzen (56) gehaltenes Sperrstück (60) aufweist.

17. Ballenstapler nach einem der Ansprüche 1 bis 16, dadurch gekennzeichnet, daß der Rutsche (7) an beiden Seiten jeweils mindestens ein federbelasteter, in die Flanken des herunterfallenden Ballens (B) zur Lagefixierung desselben auf der Rutsche (7) eingreifender Rückhalter (61) in Keilblechform zugeordnet ist.

18. Ballenstapler nach einem der Ansprüche 1 bis 17, dadurch gekennzeichnet, daß jeder Rückhalter (61) um eine in Fahrtrichtung (F) verlaufende Schwenkachse (75) am Fahrwerksrahmen (3) lagert und über ein am Fahrwerksrahmen (3) und an der Rutsche (7) angreifendes Hebelgestänge (62) in Abhängigkeit von der nach unten abschwenkenden Rutsche (7) aus dem Ballen (B) herausziehbar und durch eine Langlochführung (63) des Hebelgestänges (62) mittels der Federkraft (76) in den Ballen (B) eindrückbar ist.

19. Ballenstapler nach einem der Ansprüche 1 bis 18, dadurch gekennzeichnet, daß die Rutsche (7) in Rinnenform ausgebildet ist, mehrere U-Bügel (64) und Längsholme (65) aufweist, im U-Steg-Bereich die Plattform (9) und Tragrollen (9a) festlegt und auf den oberen Längsholmen (65) am hinteren Ende je ein Riegel (55) des Entriegelungsmechanismusses (47) befestigt ist sowie die Rutsche (7) mit ihren oberen Längsholmen (65) um eine waagerechte Achse (8) im Fahrwerksrahmen (3) schwenkbar lagert und mit einem die Rutsche (7) nach oben in die Ballen-Auffangstellung zurückschwenkendem Druckorgan (66), wie Hydraulikzylinder, verbunden ist.

20. Ballenstapler nach einem der Ansprüche 1 bis 19, dadurch gekennzeichnet, daß im Fahrwerksrahmen (3) zwischen Presskanal (4) und vorderen Schienenteilen (VS) der Gleitschienen (5) eine in Press- und Schieberichtung (R) auf unterschiedliche Ballenlängen einstellbare Zwischenrutsche (67) angeordnet ist, welche aus teleskopartig ineinandergreifenden Längsrohren (68) und dazwischen freilaufend gelagerten Ballen-Tragrollen (69) gebildet ist.

21. Ballenstapler nach einem der Ansprüche 1 bis 20, dadurch gekennzeichnet, daß der Anschlagarm (24) des Auslösers (6) um eine quer zur Press- und Schieberichtung (R) horizontal verlaufende Schwenkachse (70) bei Überlast in Press- und Schieberichtung (R) wegschwenkbar ist und zwischen Anschlagarm (24) und Schlitten (23) eine aus Gelenkhebeln (71, 72) und ein Zugorgan (74), wie Seil, Kette o. dgl. gebildete Überlastsicherung vorgesehen ist.

22. Ballenstapler nach einem der Ansprüche 1 bis 21, durch gekennzeichnet, daß am hinteren Stirnende an den Brückenständern (26) zwei um je eine vertikale Achse (81) nach innen gegen die Ballen-Vorderkante (VK) in eine Ballen-Rückhaltestellung und nach außen in die Ballen-Freigabestellung schwenkbare, federbelastete Rückhalteklappen (82) angeordnet sind.

23. Ballenstapler nach einem der Ansprüche 1 bis 22, dadurch gekennzeichnete, daß die Rückhalteklappen (82) durch einen Verriegelungsmechanismus in der Ballen-Rückhaltestellung fixiert und in Abhängigkeit von der Rutsche (7) für das Auseinanderschwenken entriegelbar und durch Zugfedern (83) in die Rückhaltestellung zurückschwenkbar sind.

## Claims

1. A mobile bale stacker for square bales (B), which is releasably coupled as a trailer device to a bale press (1), and has
- a chassis frame (3) supported by wheels (2),
- two upper slide rails (5) which on both sides in the pressing and pushing direction (R) support the bale (B) issuing from the pressing passage (4) of the bale press (1) and which in dependence on the bale (B) pivot away laterally in a downward direction by way of a trigger device (6) and release the bale (B) in a downward direction, and
- a chute (7) which extends at a spacing beneath the slide rails (5) in the pressing and pushing direction (R) and which catches and supports the dropping bale (B) and which in dependence on the following upper bale (B) dropping on to the lower bale (B) pivots in a downward direction by way of the trigger device (6) in opposite relationship to the direction of travel and which discharges the two superposed bales (B) on to the ground,
characterised in that
- the slide rails (5) and the chute (7) are arranged in the chassis frame (3) extending horizontally in superposed relationship at a spacing which is greater than the bale height,
- the slide rails (5) are each divided in the longitudinal direction into a front rail portion (VS) adjacent to the pressing passage (4) and a rear rail portion (HS) adjoining the front rail portion,
- the rail portions (VS, HS) of the slide rails (5) are jointly unlockable by the trigger device (6) by way of control means and are pivotable away downwardly by the bale weight and after each bale release are pivotable back into the bale-supporting position jointly or successively,
- the chute (7) is formed by a platform (9) with/without free-running bale support rollers (9a), which platform is pivotable in respect of height about a pivot axis (8) which is arranged under the front rail portions (VS) and which extends transversely with respect to the direction of travel (F), and
- release of the slide rails (5) and the chute (7) is effected by way of the trigger device in succession in distance-displaced relationship, wherein after release by the slide rails (5) the first bale (B1) drops on a trajectory parabola downwardly on to the chute (7) and the following bale (B2), after renewed release of the slide rails (5), drops on to the lower bale (B1) and on said lower bale (B1) performs an additional displacement travel with the trigger device (6) until the bales terminate flush at the front and for release of the chute (7) out of its horizontal bale-supporting position into a downwardly pivoted bale slip-off position for the two mutually superposed bales (B1, B2).

2. A bale stacker according to claim 1 characterised in that the front and rear rail portions (VS, HS) of each of the two lateral slide rails (5) is formed by an angle profile with a lower support limb (5a) directed towards the bale (B) and upright pivotal limbs (5b) and both slide rails (5) are pivotably mounted with their pivotal limbs (5b) behind a lateral bale longitudinal guide (42) on a pivot axis (10, 11) extending in the pressing and pushing direction (R) and can be pivoted out into the supporting position with their support limbs (5a) under the bale longitudinal guide (42) and can be pivoted with respect thereto downwardly and outwardly into the bale release position.

3. A bale stacker according to claim 1 or claim 2 characterised in that the front rail portion (VS) is fixed with reinforcing, outwardly disposed ribs (12) projecting upwardly beyond the pivotal limbs (5b) to its own pivot axis (10) in shaft form and the rear rail portion (AS) is fixed with reinforcing, outwardly disposed ribs (12) extending upwardly beyond the pivotal limbs (5b) to its own pivot axis (11) which is tubular in form and which has the pivot axis (10) in shaft form of the front rail portion (VS) passing therethrough and both pivot axes (10, 11) which are disposed one within the other in coaxial relationship are coupled to a common unlocking mechanism (13) for the pivotal movement into the bale release position and are subject to the action of tension springs (14a) for the pivotal movement into the bale-supporting position.

4. A bale stacker according to one of claims 1 to 3 characterised in that the unlocking mechanism (13) is arranged in the rear end region of each rear rail portion (HS) and has
- a respective retaining lever (15, 16) fixed to the tube pivot axis (11) of the rear rail portion (HS) and to the shaft pivot axis (10) of the front rail portion (VS), each retaining lever having a roller at its free end, and
- two hook levers (19, 20) which are associated with the two retaining levers (15, 16) and which are arranged on the chassis frame (3) on a common pivot axis (18) and which are subjected to the force of a respective tension spring (14) and which co-operate with a respective roller (17) of the retaining levers (15, 16), each hook lever having a respective extension portion (19a, 20a) projecting beyond the common pivot axis (18),
- wherein the hook lever (19) for the rear rail portion (HS) is carried rotatably on the pivot axis (18) and the hook lever (20) for the front rail portion (VS) is carried non-rotatably on the pivot axis (18), and the extension portion (19a) of the hook lever (19) for the rear rail portion (HS) engages with a pin (21) into an arcuate slot (22a) of an entrainment lever (22), which is non-rotatably carried on the pivot axis (18), for the rear rail portion (HS) with entrainment connection for both rail portions (VS, HS) for downward pivotal movement into the bale release position and for independent pivotal movement of the front rail portion (VS) relative to the rear rail portion (HS) upwardly into the bale-supporting position.

5. A bale stacker according to one of claims 1 to 4 characterised in that fixed to the rear rail portion (HS) of both slide rails (5) is an entrainment member (80) in the form of a bar or profile member which extends over the junction between the rear and front rail portions (HS, VS) and which permits a free pivotal movement of the front rail portion (VS) upwardly into the bale-supporting position and which produces a positively actuated pivotal movement of both rail portions (VS, HS) upwardly.

6. A bale stacker according to one of claims 1 to 5 characterised in that the front rail portion (VS) is of the same length as or shorter than the rear rail portion (HS).

7. A bale stacker according to one of claims 1 to 6 characterised in that the trigger device (6) has a carriage (23) which is arranged above the slide rails (5) in the end region thereof that is the rear end region in the direction of travel (F), and which is displaceable over a limited stroke movement in and in opposite relationship to the pressing and pushing direction (R), and an abutment arm (24) which is carried on the carriage and which projects vertically downwardly into the space for movement of the bale (B).

8. A bale stacker according to one of claims 1 to 7 characterised in that the carriage (23) which extends with its longitudinal direction in the pressing and pushing direction (R) is suspended by means of parallel links (25) below a bridge which is arranged at the rear end of the chassis frame (3) and which is formed from two lateral supports (26) and a transverse beam member (27), and after the trigger stroke movement can be moved back in opposite relationship to the pressing and pushing direction (R) - in the direction of travel (F) - by means of tension springs (28) which act between the links (25) and the transverse beam member (27).

9. A bale stacker according to one of claism 1 to 8 characterised in that mounted in the transverse beam member (27) is a horizontal control shaft (29) which extends transversely with respect to the pressing and pushing direction (R) and which on the one hand is non-rotatably connected to a drive lever (30) pivotable by the displaceable carriage (23) and which on the other hand carries two single-arm shift levers (31, 32) which upon rotation of the shaft co-operate successively in distance-displaced relationship with two pivotable stroke levers (33, 34) for unlocking of the slide rails (5) and the chute (7).

10. A bale stacker according to one of claims 1 to 9 characterised in that the drive lever (30) is in the form of a bell crank lever, it is carried with one lever end non-rotatably on the control shaft (29), at the apex of the bell crank configuration it force-lockingly engages with a roller (35) into entrainment means (36) of the carriage (23) for pivotal movement of the drive lever and with its other lever end it forms a travel-limiting abutment (38) co-operating with a support means of the bridge transverse beam member (27), for the carriage (23) which moves back into the starting position in the direction of travel (F).

11. A bale stacker according to one of claims 1 to 10 characterised in that the shift lever (31) for unlocking of the slide rails (5) is carried non-rotatably with one end on the control shaft (29) and the shift lever (32) for unlocking of the chute (7) is mounted with one end pivotably about the control shaft (29) and by way of a slot-screw connection (39) for distance-displaced unlocking of the chute (7) with respect to the slide rails (5) is displaceable steplessly over a limited distance with respect to the slide rail shift lever (33) and is connected rigidly for movement therewith.

12. A bale stacker according to one of claims 1 to 11 characterised in that the two stroke levers (33, 34) are formed by single-armed levers which are non-rotatably carried with one end on a respective horizontal shaft (40, 41) extending transversely with respect to the pressing and pushing direction (R) and mounted in the bridge supports (26), and which at their free lever end each have a respective contact surface (34a, 34b) for a roller (43, 44) of the shift levers (31, 32).

13. A bale stacker according to one of claims 1 to 12 characterised in that the shift and stroke levers (31, 32/33, 34) are arranged in a laterial bridge support (26) and the two stroke levers (33, 34) are coupled by way of a respective vertical pull rod (45, 46) extending in the lateral bridge support (26) to the unlocking mechanism (13/47) of the slide rails (5) and the chute (7).

14. A bale stacker according to one of claims 1 to 13 characterised in that both pull rods (45, 46) pivotably engage with their upper end by means of a fork portion (48) a respective stroke lever (33, 34), the pull rod (45) for unlocking the slide rails is mounted with a fork portion (49) at its lower end to a lever arm (50) fixed to the pivot axis (18) of the hook levers (19, 20) and the pull rod (46) for chute unlocking (47) is mounted with a fork portion (51) at its lower end to a pivotal lever (52) of the unlocking mechanism (47) of the chute (7).

15. A bale stacker according to one of claims 1 to 14 characterised in that extending in the second bridge support (26) are two pull rods (45, 46) for unlocking of the slide rails (5) and the chute (7), which with their upper end are each pivotably mounted by way of a respective fork portion (48) to stroke levers (53, 54) non-rotatably carried on the stroke lever shafts (40, 41), and are connected with their lower end by way of fork portions (49, 51) to the two unlocking mechanisms (13, 47).

16. A bale stacker according to one of claims 1 to 15 characterised in that the unlocking mechanism (47) arranged in both sides of the chute (7) has a fork-like lock member (55) fixed on the chute (7), with lock pin (56), and a blocking portion (60) which is mounted pivotably about a pivot axis (57) on the chassis frame (3) and which is connected for motion at a pivot axis (58) to the pivot lever (52) and is held by means of a tension spring (59) against the lock pin (56).

17. A bale stacker according to one of claims 1 to 16 characterised in that associated with the chute (7) at each of its two sides is at least one spring-loaded retainer member (61) in the form of a wedge-shaped plate, which engages into the flanks of the dropping bale (B) for fixing the position thereof on the chute (7).

18. A bale stacker according to one of claims 1 to 17 characterised in that the each retainer (61) is mounted on the chassis frame (3) about a pivot axis (75) extending in the direction of travel (F) and can be pulled out of the bale (B) by way of a lever linkage (62) engaging the chassis frame (3) and the chute (7) in dependence on the downwardly pivoting chute (7) and can be pressed into the bale (B) by a slot guide (63) of the lever linkage (62) by means of the spring force (76).

19. A bale stacker according to one of claims 1 to 18 characterised in that the chute (7) is of a channel-like configuration and has a plurality of U-shaped loop members (64) and longitudinal frame members (65), the platform (9) and support rollers (9a) are fixed in the region of the web portion of the U-shape and fixed on the upper longitudinal frame members (65) at the rear end is a respective lock member (55) of the unlocking mechanism (47) and the chute (7) is mounted with its upper longitudinal frame members (65) in the chassis frame (3) pivotably about a horizontal axis (8) and is connected to a pressure member (66) such as a hydraulic cylinder for pivoting the chute (7) back upwardly into the bale catching position.

20. A bale stacker according to one of claims 1 to 19 characterised in that arranged in the chassis frame (3) between the pressing passage (4) and front rail portions (VS) of the slide rails (5) is an intermediate chute (67) which can be adjusted in the pressing and pushing direction (R) to different bale lengths and which is formed from longitudinal tubes (68) engaging telescopically one into the other and bale-supporting rollers (69) which are mounted in free-running relationship between the longitudinal tubes.

21. A bale stacker according to one of claims 1 to 20 characterised in that the abutment arm (24) of the trigger device (6) can be pivoted away in the event of overload in the pressing and pushing direction (R) about a pivot axis (70) extending horizontally transversely with respect to the pressing and pushing direction (R) and provided between the abutment arm (24) and the carriage (23) is an overload protection device formed from pivot levers (71, 72) and a traction member (74) such as a cable, chain or the like.

22. A bale stacker according to one of claims 1 to 21 characterised in that arranged at the rear end at the bridge supports (26) are two spring-loaded retaining flaps (82) which are each pivotable about a respective vertical axis (81) inwardly towards the bale front edge (VK) into a bale retaining position and outwardly into the bale release position.

23. A bale stacker according to one of claims 1 to 22 characterised in that the retaining flaps (82) are fixed in the bale retaining position by a locking mechanism and can be unlocked in dependence on the chute (7) for pivoting away from each other and can be pivoted back into the retaining position by tension springs (83).

## Revendications

1. Groupeur de balles mobile pour balles parallélépipédiques (B) qui est couplé de manière dételable, en tant qu'appareil remorqué, à une presse à balles (1) et comporte
- un châssis roulant (3) supporté par des roues (2)
- deux glissières supérieures (5) qui portent des deux côtés dans la direction de compression et de glissement (R) la balle (B) sortant du canal de compression (4) et qui en fonction de la balle (B), par action d'un déclencheur (6) pivotent vers le bas en s'écartant et libèrent la balle (B) vers le bas,
- une rampe (7) disposée à distance en-dessous des glissières (5), dans la direction de compression et de glissement (R), qui reçoit la balle (B) tombant, la porte et, en fonction de la balle (B) supérieure suivante qui tombe sur la balle (B) inférieure, par action du déclencheur (6) pivote vers le bas dans la direction opposée à la direction de marche et dépose les deux balles superposées sur le sol,
caractérisé par le fait que
- les glissières (5) et la rampe (7) sont disposées horizontalement l'une au-dessus de l'autre dans le châssis roulant (3), à une distance qui est supérieure à la hauteur de la balle,
- les glissières (5), dans la direction longitudinale sont subdivisées respectivement en un tronçon de glissière antérieur (VS) voisin du canal de compression (4) et un tronçon de glissière postérieur (HS) dispoé à la suite du premier,
- les tronçons de glissière (VS, HS) des glissières (5) sont déverrouillées simultanément par le déclencheur (6) par l'intermédiaire de moyens de commande, pivotent vers le bas et s'écartant sous le poids de la balle et, après avoir libéré la balle, reviennent simultanément ou l'une après l'autre dans la position de support de la balle.
- la rampe (7) est formée d'une plateforme (9) avec/sans galets porteurs (9a) fous pour la balle, qui pivote verticalement autour d'un axe de pivotement (8) disposé sous le tronçon de glissière antérieur (VS), transversalement à la direction de marche (F)
et
- le déverrouillage des glissières (5) et de la rampe (7) par l'intermédiaire du déclencheur ayant lieu successivement, avec un décalage, la première balle (B1), après avoir été libérée par les glissières (5), tombant suivant une parabole dirigée vers le bas sur la rampe (7) et la balle suivante (B2), libérée à son tour par les glissières (5) tombant sur la balle inférieure (B1) et parcourant un chemin supplémentaire avec le déclencheur (6) sur ladite balle inférieure (B1) jusqu'à ce que les balles soient alignées au niveau de leur extrémité antérieure et pour déverrouiller la rampe (7) qui passe de sa position horizontale de support des balles dans une position inclinée de glissement des balles pour les deux balles (B1, B2) superposées.

2. Groupeur de balles selon la revendication 1, caractérisé par le fait que les tronçons de glissière antérieur et postérieur (VS, HS) de chacune des deux glissières latérales (5) sont formés d'un profilé en équerre avec une aile porteuse (5a) inférieure dirigée vers la balle (B) et des ailes de pivotement (5b) dressées et que les deux glissières (5) sont montées pivotantes par leurs ailes de pivotement (5b) autour d'un axe de pivotement (10, 11) qui s'étend dans la direction de compression et de glissement (R) derrière un guide longitudinal latéral et peuvent être sorties par pivotement dans la position de support avec leurs ailes porteuses (5a) sous le guide longitudinal latéral (42) et rentrées par pivotement vers le bas et vers l'extérieur dans la position de libération de la balle.

3. Groupeur de balles selon la revendication 1 ou 2, caractérisé par le fait que le tronçon de glissière antérieur (VS) est fixé au moyen de nervures (12) de rigidification extérieures qui s'étendent vers le haut au-delà de l'aile de pivotement (5b) à un axe de pivotement (10) propre formant un arbre et le tronçon de glissière postérieur (HS) est fixé au moyen de nervures (12) de rigidification extérieures qui s'étendent vers le haut au-delà de l'aile de pivotement (5b) à un axe de pivotement (11) propre tubulaire, dans lequel est logé l'axe de pivotement (10) formant arbre du tronçon de glissière antérieur (VS) et les deux axes de pivotement (10, 11) montés coaxialement l'un dans l'autre sont couplés à un mécanisme de déverrouillage (13) commun pour le pivotement dans la position de libération de la balle et sont sollicités par des ressorts de traction (14a) assurant le pivotement dans la position de support de la balle.

4. Groupeur de balles selon une des revendications 1 à 3, caractérisé par le fait que le mécanisme de déverrouillage (13) est disposé dans la région postérieure de chaque tronçon de glissière postérieur (HS) et
- comporte des leviers d'encliquetage (15, 16) pourvus de galets (17) à leur extrémité libre, qui sont fixés respectivement à l'axe de pivotement (11) tubulaire du tronçon de glissière postérieur (HS) et à l'axe de pivotement (10) formant arbre du tronçon de glissière antérieur (VS)
et
- deux leviers à crochet (19, 20) associés aux deux leviers d'encliquetage (15, 16), qui sont montés sur un axe de pivotement (18) commun sur le châssis roulant (3), sont sollicités chacun par un ressort de traction (14) coopèrent chauqe fois avec un galet (17) des leviers d'encliquetage (15, 16) et sont pourvus chacun d'un prolongement (19a, 20a) qui s'étend au-delà de l'axe de pivotement (18) commun,
le levier à crochet (19) associé au tronçon de glissière postérieur (HS) étant monté tournant sur l'axe de pivotement (18), le levier à crochet (20) associé au tronçon de glissière antérieur (VS) étant monté fixe en rotation sur l'axe de pivotement (18) et le prolongement (19a) du levier à crochet (19) associé au troncon de glissière postérieur (HS) s'engageant par un têton (21) dans une lumière oblongue (22a) arquée d'un levier entraîneur (22) associé au tronçon de glissière postérieur (HS), solidaire en rotation de l'axe de pivotement (18), en réalisant une liaison d'entraînement pour les deux tronçons de glissière (VS, HS) à des fins de pivotement vers le bas, dans la position de libération de la balle et de pivotement automatique du tronçon de glissière antérieur (VS) par rapport au tronçon de glissière postérieur (HS), vers le haut dans la position de support de la balle.

5. Groupeur de balles selon une des revendications 1 à 4, caractérisé par le fait qu'un entraîneur (80) se présentant sous la forme d'une barre ou d'un profilé qui s'étend sur la jonction entre les tronçons de glissière postérieur et antérieur (HS, VS) et permet un pivotement libre du tronçon de glissière antérieur (VS) vers le haut dans la position de support de balle et un pivotement forcé des deux tronçons de glissière (VS, HS) vers le haut est fixé au tronçon de glissière postérieur (HS) des deux glissières (5).

6. Groupeur de balles selon une des revendications 1 à 5, caractérisé par le fait que le tronçon de glissière antérieur (VS) a la même longueur ou est plus courte que le tronçon de glissière postérieur (HS).

7. Groupeur de balles selon une des revendications 1 à 6, caractérisé par le fait que le déclencheur (6) comporte un chariot (23) qui est disposé dans la région postérieure des glissières (5), vu dans la direction de marche (F), au-dessus de celles-ci, et peut se déplacer avec une course limitée dans la direction de compression et de glissement (R) et dans la direction opposée à celle-ci, ainsi qu'un bras de butée (24) fixé audit chariot, qui s'étend verticalement vers le bas dans l'espace de déplacement de la balle.

8. Groupeur de balles selon une des revendications 1 à 7, caractérisé par le fait que le chariot (23), dont la longueur s'étend dans la direction de compression et de glissement (R) est suspendu par un mécanisme à parallélogramme (25) sous un portique disposé à l'extrémité arrière du châssis roulant (3) et formé de deux montants latéraux (26) et d'une traverse (27) et est ramené dans sa position initiale - dans la direction de marche (F) - après la course de déclenchement par des ressorts de traction (28) qui agissent entre les bras (25) et la traverse (27) dans la direction opposée à la direction de compression et de glissement (R).

9. Groupeur de balles selon une des revendications 1 à 8, caractérisé par le fait qu'un arbre de commande (29) horizontal, qui s'étend transversalement à la direction de compression et de glissement (R) est monté dans la traverse (27), lequel arbre de commande d'une part est solidaire en rotation d'un levier moteur (30) pivotant qui est déplacé par le chariot (23) et d'autre part reçoit deux leviers de commande (31, 32) monobras qui, lors de la rotation de l'arbre, coopèrent successivement avec un décalage au niveau de la course avec deux leviers de levage (33, 34) pivotants pour le déverrouillage des glissières (5) et de la rampe (7).

10. Groupeur de balles selon une des revendications 1 à 9, caractérisé par le fait que que le levier moteur (30) est agencé sous la forme d'un levier coudé, par une extrémité de levier est solidaire en rotation de l'arbre de commande (29), au sommet du coude s'engage parun galet (35) dans des moyens d'entraînement (36) du chariot (23) aux fins de faire pivoter le levier moteur et par son autre extrémité de levier forme une butée de limitation de course (38) qui coopère avec un contre-appui sur la traverse (27) du portique, pour le chariot (23) revenant dans la position initiale, dans la direction de marche (F).

11. Groupeur de balles selon une des revendications 1 à 10 caractérisé par le fait que le levier de commande (31) pour le déverrouillage des glissières (5), à une extrémité est solidaire en rotation de l'arbre de commande (29) et que le levier de commande (32) pour le déverrouillage de la rampe (7) est monté pivotant autour de l'arbre de commande (29) à une extrémité et est déplacé par l'intermédiaire d'une liaison à vis et trou oblong (39) de manière progressive avec une course limitée par rapport au levier de commande (33) de glissière et est liée rigidement à celui-ci aux fins de déverrouiller la rampe (7) de manière décalée par rapport aux glissières (5).

12. Groupeur de balles selon une des revendications 1 à 11, caractérisé par le fait que les deux leviers de levage (33, 34) sont formés par des leviers monobras qui par une extrémité sont montés solidaires en rotation chacun d'un arbre (40, 41) horizontal disposé transversalement à la direction de compression et de glissement (R) et supporté dans les montants de portique (26) et qui à leur extrémité libre présentent chacun une surface de roulement (33a, 34a) pour un galet (43, 44) des leviers de commande (31, 32).

13. Groupeur de balles selon une des revendications 1 à 12, caractérisé par le fait que les leviers de commande et de levage (31, 32/33, 34) sont disposés dans un montant de portique latéral (26) et que les deux leviers de levage (33, 34) sont couplés au mécanisme de déverrouillage (13/47) des glissières (5) et de la rampe (7) chacun par une tige de traction (45, 46) verticale disposée dans le montant de portique latéral (26).

14. Groupeur de balles selon une des revendications 1 à 13, caractérisé par le fait que les deux tiges de traction (45, 46) sont articulées par leur extrémité supérieure, au moyen d'une partie formant chape (48), chacune sur un levier (33, 34), que la tige de traction (45) pour le déverrouillage des glissières est articulée par une partie formant chape (49) inférieure à un bras de levier (50) fixé à l'axe de pivotement (18) des leviers à crochet (19, 20) et la tige de traction (46) pour le déverrouillage de la rampe (47) est articulée par une partie formant chape (51) inférieure à un levier oscillant (52) du mécanisme de déverrouillage (47) de la rampe (7).

15. Groupeur de balles selon une des revendications 1 à 14, caractérisé par le fait que deux tiges de traction (45, 46) pour le déverrouillage des glissières (5) et de la rampe (7) s'étendent dans le deuxième montant de portique (26), lesquelles tiges de traction sont articulées à leur extrémité supérieure chacune par une partie formant chape (48) sur les leviers de levage (53, 54) solidaires en rotation des arbres des leviers (40, 41).

16. Groupeur de balles selon une des revendications 1 à 15, caractérisé par le fait que le mécanisme de déverrouillage (47) disposé des deux côtés de la rampe (7) présente un verrou (55) en forme de fourche fixé à la rampe (7), avec un axe de verrouillage (56) et un élément de blocage (60) qui est monté pivotant autour d'un axe de pivotement (57) sur le châssis roulant (3), est lié cinématiquement par un axe (58) au levier oscillant (52) et est appliqué contre l'axe de verrouillage (56) par un ressort de traction (59).

17. Groupeur de balles selon une des revendications 1 à 16, caractérisé par le fait qu'au moins un moyen de retenue (61), sous la forme d'un coin en tôle sollicité par des ressorts, est associé à la rampe (7) de chaque côté de celle-ci, lequel moyen de retenue s'enfonce dans les flancs de la balle (B) déposé sur la rampe (7) aux fins de la tenir.

18. Groupeur de balles selon une des revendications 1 à 17, caractérisé par le fait que chaque moyen de retenue (61) est monté sur le châssis roulant (3) sur un axe de pivotement (75) qui s'étend dans la direction de marche (F) et par l'intermédiaire d'une tringlerie (62) qui agit sur le châssis roulant (3) et sur la rampe (7), en fonction du basculement vers le bas de la rampe (7) peut être retiré de la balle (B) et grâce à un guidage à trou oblong (63) de la tringlerie (62) peut être enfoncé par la force de ressorts (76) dans la balle (B).

19. Groupeur de balles selon une des revendications 1 à 18, caractérisé par le fait que la rampe (7) est conformée en gouttière, présente plusieurs arceaux (64) en forme de U et des longerons (65), comporte dans la région de la base du U la plateforme (9) et des galets porteurs (9a) et qu'un verrou (55) faisant partie du mécanisme de verrouillage (47) est fixé sur chacun des longerons supérieurs (65) à l'extrémité arrière de celui-ci et que la rampe (7) est montée pivotante par ses longerons supérieurs (65) autour d'un axe (8) horizontal dans le châssis (3) et est liée à un organe de pression (66) tel qu'un vérin hydraulique qui ramène la rampe (7) vers le haut dans la position de réception de la balle .

20. Groupeur de balles selon une des revendications 1 à 19, caractérisé par le fait qu'une rampe intermédiaire (67) réglable à différentes longueurs de balle dans la direction de compression et de glissement (R) est disposée dans le châssis roulant (3) entre le canal de compression (4) et les tronçons de glissière antérieurs (VS) des glissières (5), laquelle glissière intermédiaire est formée de tubes longitudinaux (68) qui coulissent l'un dans l'autre de manière télescopique et de galets porteurs (69) pour les balles, qui sont montés fous entre les tubes longitudinaux.

21. Groupeur de balles selon une des revendications 1 à 20, caractérisé par le fait que le bras de butée (24) du déclencheur (6) est monté pivotant autour d'un axe de pivotement (70) horizontal qui s'étend transversalement à la direction de compression et de glissement (R) de manière à pouvoir s'escamoter en cas de surcharge dans la direction de compression et de glissement (R)et qu'une sécurité contre les surcharges formée de leviers articulés (71, 72) et un organe de traction, tel qu'un câble, une chaîne ou similaire est prévue entre le bras de butée (24) et le chariot (23).

22. Groupeur de balles selon une des revendications 1 à 21, caractérisé par le fait que deux volets de retenue (82) sollicités par ressorts qui sont poussés vers l'intérieur contre le bord antérieur (VK) de la balle dans la position de retenue et peuvent pivoter chacun autour d'un axe vertical (81) vers l'extérieur dans la position de libération de la balle sont disposés à l'extrémité frontale arrière sur les montants (26) du portique .

23. Groupeur de balles selon une des revendications 1 à 22, caractérisé par le fait que les volets de retenue (82) sont bloqués dans la position de retenue de la balle par un mécanisme de verrouillage et peuvent être déverrouillés en relation avec la rampe (7), aux fins de s'écarter, et sont ramenés dans la position de retenue de la balle par des ressorts de traction (83).
